# Europäisches Patentamt

## European Patent Office

## Office européen des brevets

(11) Veröffentlichungsnummer: **0 199 850**
**B1**

(12) # EUROPÄISCHE PATENTSCHRIFT

(45) Veröffentlichungstag der Patentschrift:
08.03.89

(51) Int. Cl.⁴: **B 29 C 43/02,** B 29 C 67/04

(21) Anmeldenummer: **85115974.9**

(22) Anmeldetag: **14.12.85**

(54) Vorrichtung zum gegenseitigen Verkleben thermisch erweichbarer Partikel zu einem Kunststoffkörper.

(30) Priorität: **18.04.85 DE 3514022**

(43) Veröffentlichungstag der Anmeldung:
**05.11.86 Patentblatt 86/45**

(45) Bekanntmachung des Hinweises auf die Patenterteilung:
**08.03.89 Patentblatt 89/10**

(84) Benannte Vertragsstaaten:
**DE FR GB SE**

(56) Entgegenhaltungen:
**DE-A-2 119 358**
**FR-A-2 058 044**
**GB-A-1 578 045**

(73) Patentinhaber: **Firma Carl Freudenberg, Höhnerweg 4, D-6940 Weinheim/Bergstrasse (DE)**

(72) Erfinder: **Kunkel, Hans- Achim, Panoramastrasse 2, D-6101 Reichelsheim (DE)**

(74) Vertreter: **Weissenfeld- Richters, Helga, Dr., Höhnerweg 2, D-6940 Weinheim/Bergstrasse (DE)**

EP 0 199 850 B1

## Beschreibung

Die Erfindung betrifft eine Vorrichtung zum gegenseitigen Verkleben thermisch erweichbarer Partikel zu einem Kunststoffkörper, umfassend ein Formwerkzeug mit gasdurchlässigen Wänden, in das die Partikel in loser Schüttung einbringbar sind, Mittel zur Verpressung der Partikel sowie Mittel zur Erzeugung einer das Formwerkzeug und die darin enthaltene Schüttung durchdringenden Strömung aus einem erhitzten Gas.

Auf eine Vorrichtung der vorgenannten Art nimmt die GB-PS-1 578 045 Bezug. Sie besteht im wesentlichen aus zwei parallel zueinander geführten Siebbändern, die eine Schüttung aus thermisch erweichbaren Partikeln zu einer Schicht verpressen und quer durch einen Düsentrockner hindurchgeführt sind. Letzterer umfaßt einen kreisförmig in sich geschlossenen Windkanal, in dem das enthaltene Luftvolumen durch Heizelemente erhitzt und durch Gebläse in eine gerichtete Bewegung versetzt ist. Das aus den beiden Siebbändern gebildete Formwerkzeug wird dadurch stets in gleicher Richtung durchströmt, was dazu führt, daß die in dem gebildeten Formteil enthaltenen, thermisch erweichbaren Partikel im Bereich beider Oberflächen unterschiedlich gut versintert sind. Das Formteil weist dadurch nicht nur im Bereich beider Oberflächen eine unterschiedliche Glätte auf, sondern einen unsymmetrischen Aufbau seines Querschnittes. Die Verwendung eines entsprechenden Formteiles als Konstruktionselement ist daher problematisch.

Des weiteren wird bemängelt, daß die Verwendung von Siebbändern bei der beschriebenen Vorrichtung es ausschließt, andere als säulenförmig gestaltete Kunststoffkörper zu erzeugen. Das ist häufig unzureichend und erfordert Nacharbeit. Sowohl die Siebbänder als auch der Windkanal erfordern darüber hinaus ein erhebliches Investitionsvolumen, was unter wirtschaftlichen Gesichtspunkten nur selten zu vertreten ist.

Aus der DE-OS-2 119 358 ist ein Verfahren zum Ausschäumen von Bauelementen bekannt, bei dem expandierbare Polystyrolpartikel in Hohlräume der Bauelemente eingefüllt und durch anschließendes Durchblasen von Heißluft oder Heißdampf expandiert und untereinander und mit den Bauelementen verklebt werden. Die räumliche Struktur der auf diese Weise erhaltenen Ausschäumungen ist hinsichtlich ihrer Gleichmäßigkeit wenig befriedigend und schließt es aus, eine solche Verfahrensweise im Hinblick auf die Erzeugung frei verwendbarer Kunststoffkörper einzusetzen.

Der Erfindung liegt die Aufgabe zugrunde, eine Vorrichtung der eingangs genannten Art derart weiterzuentwickeln, daß bei vermindertem Investitionsvolumen beliebig gestaltete Kunststoffkörper von verbesserter Qualität erhalten werden können.

Diese Aufgabe wird erfindungsgemäß bei einer Vorrichtung der eingangs genannten Art dadurch gelöst, daß das Formwerkzeug als Kolben ausgebildet ist, daß der Kolben in einem durch Stirnwände begrenzten und das Gas enthaltenden, verschließbaren Raum gelagert ist, daß der Kolben gegenüber den Umfassungswänden des Raumes abgedichtet und zwischen den Stirnwänden hin- und herbewegbar ist und daß die Mittel zur Erzeugung der Strömung aus den Kolben bewegenden Bewegungsmitteln bestehen. Auf vorteilhafte Ausgestaltungen nehmen die Unteransprüche Bezug.

Die Erwärmung der Partikel auf Sintertemperatur erfolgt bei der erfindungsgemäßen Vorrichtung ebenso wie bei derjenigen nach dem Stande der Technik durch Hindurchpressen eines bestimmten Volumens erhitzen Gases durch die Zwischenräume zwischen den einzelnen Partikeln. Grundlage für diesen Vorgang ist jedoch nicht eine künstlich erzeugte Bewegung des Gases, diese verbleibt ruhend in dem von den Stirnwänden und den Umfassungswänden umschlossenen Raum, sondern die Hin- und Herbewegung des das Formwerkzeug enthaltenden Kolbens zwischen den Stirnwänden des Raumes. Die erfindungsgemäße Vorrichtung kann dadurch konstruktiv wesentlich kleiner und kostengünstiger gestaltet werden als die eingangs beschriebene Ausführung.

Die Wärme- und Energieverluste sind daher wesentlich geringer.

Im einfachsten Falle wird das in der erfindungsgemäßen Vorrichtung in dem Kolben enthaltene Formwerkzeug während der angesprochenen Hin- und Herbewegung des Kolbens von beiden Seiten in gleicher Weise durchströmt. Die Sinterbedingungen sind in diesem Falle im Bereich beider Seiten absolut identisch, was es erleichtert, das erhaltene Formteil als Konstruktionselement zu verwenden.

Die gezeigte Vorrichtung eignet sich zur Herstellung beliebig gestalteter Formteile aus thermisch erweichbaren Kunststoffpartikeln, sie ist jedoch besonders geeignet zur Erzeugung flächiger Produkte, wie beispielsweise eines Autohimmels oder einer Innenraumverkleidung für ein Kraftfahrzeug. Sowohl in statischer als auch in akustischer Hinsicht lassen sich in diesem Falle ausgezeichnete Werte von großer Kontinuität erzielen.

Der Raum, in dem der Kolben hin- und herbewegbar ist, soll leicht zugänglich sein, um eine einfache Be- und Entladung des Formwerkzeuges zu ermöglichen. Als zweckmäßig hat es sich diesbezüglich erwiesen, wenn eine der den Raum in Bewegungsrichtung des Kolbens begrenzenden Stirnwände ähnlich einer Tür ausgebildet und betätigbar ist. Das Beschicken des Kolbens erfolgt in diesem Falle zweckmäßig in einer der angesprochenen Stirnwand angenäherten Lage.

Die spezielle Ausbildung des Formnestes in dem Kolben ist abhängig von der Art der zu verarbeitenden, thermisch erweichbaren Partikel. Diese können beispielsweise aus einem ungeschäumten oder einem fertig geschäumten, thermisch erweichbaren Material bestehen, was es erfordert, die Größe des Formnestes im Anschluß an die thermische Erweichung zumindest der Oberflächen der Partikel zu vermindern, um eine ausreichende gegenseitige Verpressung zu erzielen. Das Formnest kann zur Erreichung dieses Zweckes in einem Bereich durch einen Teilkolben begrenzt sein, der unabhängig von der Bewegung des Kolbens in Richtung des Formnestes vorschiebbar ist. Eine Lagerung des Teilkolbens in einer Führung des Kolbens ist in diesem Falle zweckmäßig, wobei Antriebsmittel für die Verschiebung in Richtung des Formnestes vorgesehen sind. Die Antriebsmittel können im einfachsten Falle durch einfache Federkörper gebildet werden.

Die Verwendung entsprechender Hilfsmittel ist entbehrlich in Fällen, in denen Partikel zur Verarbeitung gelangen, die unter den Bedingungen ihrer gegenseitigen Verklebung eine Volumenvergrößerung erfahren. Das ist beispielsweise der Fall bei der Verarbeitung von Partikeln, die nur teilweise aufgeschäumt sind oder bei der Verarbeitung von Partikeln, die vollkommen ungeschäumt sind, jedoch einen Gehalt an Treibmittel aufweisen, das unter den Bedingungen der Verklebung ein Aufschäumen der Partikel bewirkt. Die notwendige Verpressung der Partikel untereinander und mit der Wandung des Formwerkzeuges ergibt sich in diesem Falle als unmittelbare Folge des unter den Verklebungsbedingungen ablaufenden Aufschäumungsprozesses.

Die erhaltenen Formteile zeichnen sich durch eine besonders hohe Oberflächengüte aus. Sie lassen sich in konstruktiver Hinsicht vielfältig variieren.

Der Kolben kann im einfachsten Falle von Hand hin- und herbewegt werden insofern, da überraschenderweise weder ein besonders großer Kolbenhub noch eine besonders große Bewegungsgeschwindigkeit erforderlich ist. Im Hinblick auf die Erzielung eines kontinuierlichen Arbeitsergebnisses hat es sich jedoch als zweckmäßig erwiesen, wenn die Hin- und Herbewegung sowohl hinsichtlich der Geschwindigkeit als auch hinsichtlich des Hubes mit großer Gleichmäßigkeit durchgeführt wird. Unter diesem Gesichtspunkt hat es sich auch als zweckmäßig erwiesen, wenn die Mittel für die Hin- und Herbewegung des Kolbens motorisch angetrieben sind. Eine gute Auswuchtung der Bewegungsmittel erleichtert dabei die Vermeidung unerwünschter Schwingungen.

Die Versinterungsbedingungen der Partikel lassen sich besonders einfach variieren bei einer Ausführung, bei der die den Kolben beiderseits begrenzenden Teilräume durch einen Überströmkanal mit verengbarem Durchflußquerschnitt verbunden sind. Eine Veränderung des Durchflußquerschnittes hat in diesem Falle eine Veränderung des durch die Zwischenräume zwischen den Partikeln hindurchgepreßten Gasvolumens zur Folge, was unabhängig von der Veränderung der Bewegungsgeschwindigkeit und/oder des Hubes des Kolbens möglich ist.

Dabei ergibt sich zusätzlich der erhebliche Vorteil, daß entsprechende Veränderungen des Durchgangsquerschnittes unter Verwendung einfacher technischer Mittel stufenlos möglich sind, was es erlaubt, bestimmte Versinterungsbedingungen präzise einzustellen.

Des weiteren ist es bei einer entsprechenden Ausführung möglich, den Überströmkanal so zu gestalten, daß der Durchflußquerschnitt in der einen Durchströmungsrichtung größer ist als in der anderen. Die Versinterungsbedingungen der Partikel unterscheiden sich dementsprechend voneinander und verleihen dem fertigen Formteil einen gezielten unsymmetrischen Querschnitt. Für einige Anwendungsfälle ist das von großem Vorteil. Eine entsprechende Profilgestaltung läßt sich jedoch auch mit einer Vorrichtung erzielen, bei der der Kolben in der einen Bewegungsrichtung schneller bewegbar ist als in der anderen. Die Ausführung ist im allgemeinen etwas aufwendiger gestaltet als die vorstehend beschriebene. Sie arbeitet jedoch nahezu geräuschlos, was ebenfalls beachtlich ist.

Der Kolben der erfindungsgemäßen Vorrichtung ist gegenüber den Umfassungswänden durch einen engen Spalt oder übliche Kolben-Dichtmittel abgedichtet. Dem Fachmann sind diesbezüglich vielfältige Möglichkeiten bekannt, wobei es sich als zweckmäßig erwiesen hat, die eigen-t liche Abdichtung von der Führung zu trennen, insbesondere bei Ausführungen, bei denen sehr großformatige Werkstücke erzeugt werden müssen, wie beispielsweise ein durchschnittlicher Autohimmel mit einer Fläche von etwa 1,8 m².

Das in dem Kolben enthaltene Formnest soll gut von einem Gas durchströmbar sein. Es besteht demzufolge zweckmäßig aus einem Sieb oder Lochblech mit einem Offenflächenanteil von wenigstens 40 %. Um dennoch die erforderliche Steife zu erzielen, hat es sich als vorteilhaft bewährt, wenn das dem fertigen Teil entsprechend gestaltete Lochblech oder Sieb auf einer Stützkonstruktion abgetragen ist, beispielsweise einer wabenähnlich gestalteten Skelettstruktur oder einer Rippenkonstruktion.

In Fällen, in denen ein Motor für die Hin- und Herbewegung des Kolbens zur Anwendung gelangt, ist neben einer elektrisch angetriebenen auch eine Ausführung denkbar, die auf ein hydraulisches oder ein pneumatisches Antriebsmittel zurückgreift. Dem Fachmann sind die einzelnen Ausführungen und ebenso die dazu benötigten Steuerungen bekannt. Sie bedürfen daher in der vorliegenden Anmeldung keiner besonderen Erläuterung.

Eine beispielhafte Ausführung der erfindungsgemäßen Vorrichtung ist in der in der Anlage beigefügten Zeichnung dargestellt. Sie wird nachfolgend näher erläutert:

Die gezeigte Vorrichtung dient zur Herstellung eines Autohimmels aus teilgeschäumten Polycarbonatpartikeln. Diese haben bei einer unregelmäßigen Oberflächengestalt einen mittleren Durchmesser von 2 mm bis 5 mm und ein Schüttgewicht von 15 bis 200 kg/m$^3$.

Von den Partikeln werden 7,8 l abgemessen und gleichmäßig in dem Formnest des Kolbens 1 verteilt. Dieses wird anschließend geschlossen, wobei die gleichsinnig geschüsselten Formhälften entsprechend der Gestalt eines Autohimmels einen im wesentlichen gleichbleibenden Abstand von 5,6 mm einnehmen. Sie bestehen aus Lochblechen, die in Querrichtung von gleichmäßig verteilten, kreisförmig begrenzten Bohrungen eines Durchmessers von 4 mm durchdrungen sind, wobei der Offenflächenanteil eines jeden der beiden Lochbleche 48 % beträgt.

Der Kolben ist gegenüber den Umfassungswänden des Raumes 2 durch Filzstreifen abgedichtet und auf einem Querjoch 3 gelagert, das seinerseits mit der Kolbenstange 4 des pneumatischen Antriebes 5 verbunden ist. Die an den Kolben ober- und unterseitig angrenzenden Teilräume enthalten jeweils eine Heizeinrichtung 6 in Gestalt eines Ölradiators. Das enthaltene Luftvolumen weist dadurch 5 Sekunden nach dem Schließen der oberen Stirnwand eine mittlere Temperatur von 260° C auf.

Durch Betätigung des Antriebes 5 wird der Kolben anschließend in eine senkrechte Hin- und Herbewegung versetzt, wobei der Hub so bemessen ist, daß der Kolben abwechselnd die beiderseitigen Stirnwände des Raumes 2 nahezu erreicht. Die erhitzte Luft durchströmt dadurch die Zwischenräume zwischen den Partikeln in abwechselnder Richtung, wodurch es zu einer schnellen Aufheizung der Partikel kommt. Beim Erreichen der Schmelztemperatur des Polymeren, kommt es durch das noch enthaltene Treibmittel zu einer erheblichen Volumenvergrößerung der Partikel und in diesem Zusammenhang zu einer starken gegenseitigen Verpressung untereinander und mit der Innenwandung des Formnestes.

Dieses wird schließlich nahezu vollständig ausgefüllt, wobei die Partikel untereinander verkleben.

Das gegenseitige Verkleben der einzelnen Partikel bedingt zwangsläufig eine Verminderung des ursprünglich in der losen Schüttung enthaltenen, freien Porenvolumens. Das weitere Hindurchströmen von erhitztem Gas durch die Porenstruktur während der Hin- und Herbewegung des Kolbens wird dadurch behindert, d. h. es ergibt sich mit zunehmender Hin- und Herbewegung des Kolbens ein zunehmend stärker werdender Druckaufbau auf dessen Vorderseite. Dieser Druckaufbau ist ein Indikator für die erreichte gegenseitige Verschweißung der einzelnen Partikel. Die die Verschweißung der Partikel bewirkende Hin- und Herbewegung des Kolbens läßt sich dadurch problemlos zum richtigen Zeitpunkt unterbrechen.

Im Hinblick auf die Vermeidung unnötiger Energieverluste hat es sich als zweckmäßig erwiesen, wenn der Kolben zum Entnehmen des fertigen Werkstückes nach Entfernung der oberen Stirnwand möglichst weit angehoben wird. Das gesamte Volumen an erhitzter Luft befindet sich in diesem Falle unterhalb des Kolbens, während dessen Oberseite von kalter Luft anströmbar ist. Das Abkühlen des fertigen Werkstückes wird hierdurch beschleunigt. Es läßt sich weiter beschleunigen durch Einleitung von Druckluft in den Bereich zwischen dem Kolbenunterteil und dem fertigen Werkstück. Da der an den Kolben unterseitig anschließende Teilraum allseitig geschlossen ist, ist ein Entweichen dieser Luft nur nach oben möglich. Eine entsprechende Zuführung kalter Druckluft ist daher bestens geeignet, überschüssige Wärme zügig und kostengünstig abzuführen.

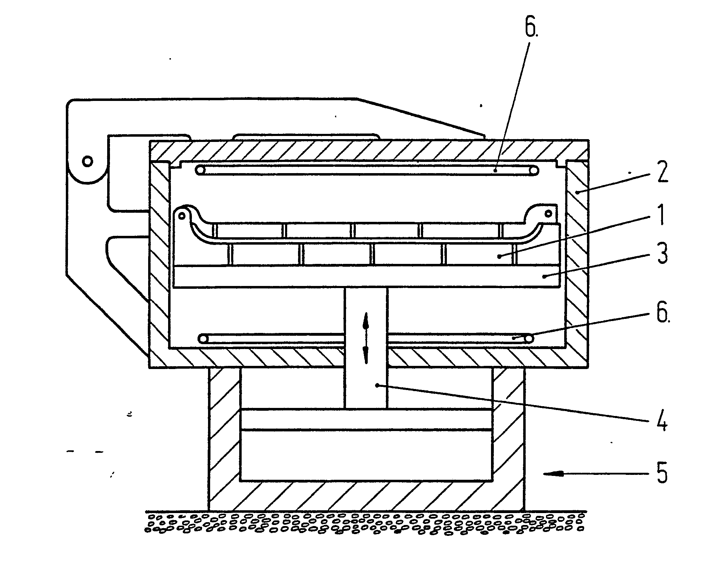

## Patentansprüche

1. Vorrichtung zum gegenseitigen Verkleben thermisch erweichbarer Partikel zu einem Kunststoffkörper, umfassend ein Formwerkzeug mit gasdurchlässigen Wänden, in das die Partikel in loser Schüttung einbringbar sind, Mittel zum Verpressen der Partikel sowie Mittel zur Erzeugung einer das Formwerkzeug und die darin enthaltene Schüttung durchdringenden Strömung aus einem erhitzten Gas, dadurch gekennzeichnet, daß das Formwerkzeug als Kolben (1) ausgebildet ist, daß der Kolben (1) in einem durch Stirnwände und Umfassungswände begrenzten und das Gas enthaltenden, verschließbaren Raum gelagert ist, daß der Kolben gegenüber der Umfassungswand des Raumes (2) abgedichtet und zwischen den Stirnwänden hin- und herbewegbar ist und daß die Mittel zur Erzeugung der Strömung aus einem den Kolben bewegenden Antrieb (5) bestehen.

2. Vorrichtung nach Anspruch 1, dadurch gekennzeichnet, daß der Kolben (1) ein Formnest umfaßt, das durch einen ablösbaren Teilkolben in Bewegungsrichtung begrenzt ist.

3. Vorrichtung nach Anspruch 2, dadurch gekennzeichnet, daß der Teilkolben unabhängig von den Bewegungen des Kolbens (1) in Richtung des Formnestes verschiebbar ist.

4. Vorrichtung nach Anspruch 3, dadurch gekennzeichnet, daß der Teilkolben in einer Führung des Kolbens (1) gelagert ist und daß Antriebsmittel für die Verschiebung in Richtung des Formnestes vorgesehen sind.

5. Vorrichtung nach Anspruch 4, dadurch gekennzeichnet, daß die Antriebsmittel aus mindestens einem Federkörper bestehen.

6. Vorrichtung nach Anspruch 1 bis 5, dadurch gekennzeichnet, daß die Bewegungsmittel des Kolbens durch einen motorischen, hydraulischen oder pneumatischen Antrieb (5) gebildet sind.

7. Vorrichtung nach Anspruch 1 bis 6, dadurch gekennzeichnet, daß die den Kolben (1) beiderseits begrenzenden Teile durch einen Überströmkanal verbunden sind.

8. Vorrichtung nach Anspruch 7, dadurch gekennzeichnet, daß der Überströmkanal einen verengbaren Durchflußquerschnitt aufweist.

9. Vorrichtung nach Anspruch 7 bis 8, dadurch gekennzeichnet, daß der Überströmkanal einen Durchflußquerschnitt aufweist, der in der einen Durchströmungsrichtung größer ist als in der anderen Durchströmungsrichtung.

10. Vorrichtung nach Anspruch 1 bis 9, dadurch gekennzeichnet, daß der Kolben (1) einen verstellbaren Hub aufweist.

11. Vorrichtung nach Anspruch 1 bis 10, dadurch gekennzeichnet, daß der Kolben (1) in der einen Bewegungsrichtung schneller bewegbar ist als in der anderen Bewegungsrichtung.

12. Vorrichtung nach Anspruch 1 bis 11, dadurch gekennzeichnet, daß der den Kolben (1) enthaltende Raum durch eine entfernbare Stirnwand geschlossen ist.

13. Vorrichtung nach Anspruch 1 bis 12, dadurch gekennzeichnet, daß der den Kolben (1) enthaltende Raum (2) thermisch isoliert ist.

## Claims

1. An apparatus for the interbonding of thermally softenable particles to form a plastics body, comprising a mould with gas-permeable walls, into which the particles can be poured in a loose fill, means for compressing the particles and means for generating from a heated gas a flow penetrating the mould and the fill contained therein, characterized in that the mould is designed as a ram (1), in that the ram (1) is mounted in a space which is bounded by end walls and surrounding walls, contains the gas and can be closed off, in that the ram is sealed off with respect to the surrounding wall of the space (2) and can be moved back and forth between the end walls and in that the means for generating the flow consist of a drive (5) moving the ram.

2. An apparatus according to claim 1, characterized in that the ram (1) encompasses a mould cavity, which is bounded in the direction of movement by a detachable part-ram.

3. An apparatus according to claim 2, characterized in that the part-ram can be displaced in the direction of the mould cavity independently of the movements of the ram (1).

4. An apparatus according to claim 3, characterized in that the part-ram is mounted in a guide of the ram (1) and in that drive means are provided for the displacement in the direction of the mould cavity.

5. An apparatus according to claim 4, characterized in that the drive means are composed of at least one spring body.

6. An apparatus according to any of claims 1 to 5, characterized in that the means of movement of the ram are formed by a motorized, hydraulic or pneumatic drive (5).

7. An apparatus according to any of claims 1 to 6, characterized in that the parts bounding the ram (1) at either end are connected by an overflow channel.

8. An apparatus according to claim 7, characterized in that the overflow channel has a constrictable flow cross-section.

9. An apparatus according to claim 7 or 8, characterized in that the overflow channel has a flow cross-section which is greater in the one flow direction than in the other flow direction.

10. An apparatus according to any of claims 1 to 9, characterized in that the ram (1) has an adjustable stroke.

11. An apparatus according to any of claims 1 to 10, characterized in that the ram (1) can be moved more quickly in the one direction of movement than in the other direction of movement.

12. An apparatus according to any of claims 1 to 11, characterized in that the space containing the ram (1) is closed by a removable end wall.

13. An apparatus according to any of claims 1 to 12, characterized in that the space (2) containing the ram (1) is thermally insulated.

## Revendications

1. Dispositif pour le collage mutuel de particules ramollissant thermiquement pour former un corps plastique, comprenant un outil de forme avec des parois perméables aux gaz, dans lequel les particules peuvent être introduites en vrac, un moyen pour comprimer les particules ainsi qu'un moyen pour créer un écoulement de gaz chauffé traversant l'outil de forme et le produit en vrac qu'il contient, caractérisé en ce que l'outil de forme se présente sous forme de piston (1), que le piston (1) est placé dans une enceinte pouvant être fermée contenant le gaz et limitée par des parois frontales et des parois périphériques, que le piston est rendu étanche par rapport aux parois périphériques de l'enceinte (2) et peut se déplacer d'un mouvement alternatif entre les parois frontales et que le moyen pour créer l'écoulement est constitué d'une transmission (5) entraînant le piston.

2. Dispositif selon la revendication 1, caractérisé en ce que le piston (1) comprend une cavité de forme qui est limitée dans la direction du déplacement par un piston divisé amovible.

3. Dispositif selon la revendication 2, caractérisé en ce que le piston divisé peut se déplacer en direction de la cavité de forme, indépendamment du déplacement du piston (1).

4. Dispositif selon la revendication 3, caractérisé en ce que le piston divisé est placé dans un guide du piston (1) et que les moyens d'entraînement pour le déplacer en direction de la cavité de forme sont prevus.

5. Dispositif selon la revendication 4, caractérisé en ce que les moyens d'entraînement comprennent au moins un corps élastique.

6. Dispositif selon les revendications 1 à 5, caractérisé en ce que les moyens de déplacement du piston sont constitués par une commande (5) à moteur, hydraulique ou pneumatique.

7. Dispositif selon les revendications 1 à 6, caractérisé en ce que les pièces limitant de part et d'autre le piston (1) sont reliées par un canal de transfert.

8. Dispositif selon la revendication 7, caractérisé en ce que le canal de transfert présente une section de passage pouvant être rétrécie.

9. Dispositif selon les revendications 7 et 8, caractérisé en ce que le canal de transfert présente une section de passage qui est plus grande dans une direction d'écoulement que dans l'autre direction d'écoulement.

10. Dispositif selon les revendications 1 à 9, caractérisé en ce que le piston (1) présente une course réglable.

11. Dispositif selon les revendications 1 à 10, caractérisé en ce que le piston (1) peut se déplacer plus rapidement dans une direction de déplacement que dans l'autre direction de déplacement.

12. Dispositif selon les revendications 1 à 11, caractérisé en ce que l'enceinte contenant le piston (1) est fermée par une paroi frontale amovible.

13. Dispositif selon les revendications 1 à 12, caractérisé en ce que l'enceinte (2) contenant le piston (1) est isolée thermiquement.